# EUROPEAN PATENT SPECIFICATION

(11) **EP 4 103 392 B1**
(45) Date of publication and mention of the grant of the patent: **28.01.2026**
(21) Application number: 21711768.8
(22) Date of filing: 03.03.2021
(51) Int. Cl.: B29C 70/44, B29D 99/00, B29C 33/00, B29C 70/48, B29C 70/54, B29C 35/02, B29L 31/08

(54) **METHOD FOR MANUFACTURING A WIND TURBINE BLADE AND MOLD FOR MANUFACTURING A WIND TURBINE BLADE**
VERFAHREN ZUR HERSTELLUNG EINER WINDTURBINENSCHAUFEL UND FORM ZUR HERSTELLUNG EINER WINDTURBINENSCHAUFEL
PROCÉDÉ ET MOULE DE FABRICATION D'UNE PALE D'ÉOLIENNE

(30) Priority: 27.03.2020 EP 20166192
(43) Date of publication of application: 21.12.2022
(73) Proprietor: Siemens Gamesa Renewable Energy A/S, 7330 Brande (DK)
(72) Inventor: OLESEN, Bendt, 9270 Klarup (DK); HARBOE, Niels, 9560 Hadsund (DK); OOSTEROM, Samuel Robert Van, 9220 Aalborg (DK); POULSEN, Peter Møller, 8900 Randers C (DK)
(74) Representative: SGRE-Association
(86) International application number: PCT/EP2021/055237
(87) International publication number: WO 2021/190882

(56) References cited:
- EP-A1- 2 335 909
- US-A1- 2002 155 186
- GINGER GARDINER: "Sensors for monitoring resin infusion flow front and cure", COMPOSITESWORLD, 27 February 2018 (2018-02-27), XP055726360, Retrieved from the Internet <URL:https://www.compositesworld.com/articles/sensors-for-monitoring-resin-infusion-flow-front-and-cure> [retrieved on 20200831]

## Description

The present invention relates to a method for manufacturing a wind turbine blade and to a mold for manufacturing the wind turbine blade.

One way to produce more power using a wind turbine under given wind conditions is to increase the size of the blades. However, the manufacture of wind turbine blades is becoming increasingly difficult for increasing blade sizes.

Currently, many wind turbine blades are made by pre-manufacturing parts of the blade separately, such as a pressure-side shell and a suction-side shell, and gluing the parts to each other. The parts are, for example, premanufactured by infusing composite materials such as glass fibers with a resin and curing the resin. However, the gluing process has many disadvantages. It is, for example, difficult to achieve a sufficient strength and robustness of the glueline.

In another method, disclosed in EP 1 310 351 A1, the blade is manufactured by packing composite materials for the entire blade, or for a lengthwise blade section, on a mandrel (mold core) and by infusing resin in a vacuum-assisted manner and curing the resin. Thereby, glue joints are avoided.

EP 2 335 909 A1 discloses a closed mould arrangement for building up a blade. The mould comprises a lower mould part and an upper mould part. In an inner surface of the lower mould part a number of flow ducts or inlet channels are integrated. In an inner surface of the upper mould part a number of flow ducts or inlet channels are integrated. The flow ducts or inlet channels comprise openings towards an inner cavity formed by the lower mould part and the upper mould part.

In "Sensors for monitoring resin infusion flow front and cure" from Ginger Gardiner (Compositesworld, 27 February 2018, Retrieved from the Internet on 2020-08-31) sensors are disclosed which can provide data in real time of a resin flow front, a level of impregnation and a state of cure during infusion of carbon fibre reinforced plastic and other composite parts with resin.

However, with increasing blade sizes and, thus, increasing blade cross-sections it becomes difficult to raise the resin to the top of the blade by vacuum-assisted infusion. The gravitational force in combination with the density of the resin used for the infusion defines the maximum height the resin can be raised by the use of vacuum alone. Therefore, manufacturing large wind turbine blades having for example a diameter at the root section of larger than about 5.5 meter by vacuum-assisted infusion is challenging.

It is one object of the present invention to provide an improved method for manufacturing a wind turbine blade.

Accordingly, a method for manufacturing a wind turbine blade is provided. The method comprises the steps of:
- arranging an upper mold on a lower mold, wherein a dry fiber lay-up is arranged in the upper mold or in the upper mold and the lower mold,
- applying vacuum to a space between the upper and lower molds, and
- infusing the dry fiber lay-up in the upper and/or lower molds with resin, wherein the resin is at least partially provided through at least one upper resin inlet arranged at an upper portion of the upper mold.

Having the at least one upper resin inlet of the upper mold allows to improve the vacuum-assisted resin infusion. For example, resin provided through the at least one upper resin inlet has to be raised by a smaller height to reach the top of the mold. Further, an inlet pressure of the resin can be allowed to be higher during an initial phase of the infusion process. For example, a resin flow of the resin provided through the at least one upper resin inlet is supported in a downward direction by the gravitational force. Therefore, dry fiber lay-up in the upper and lower molds can be better wetted with resin, even for large blade cross-sections. Thus, dry areas can be better prevented in the manufactured blade. In addition, a time needed for infusing the entire blade may be reduced.

The wind turbine blade is part of a rotor of a wind turbine. The wind turbine is an apparatus to convert the wind's kinetic energy into electrical energy. The wind turbine comprises, for example, the rotor having one or more of the blades connected each to a hub, a nacelle including a generator, and a tower holding, at its top end, the nacelle. The tower of the wind turbine may be connected via a transition piece to a foundation of the wind turbine, such as a monopile in the seabed.

The wind turbine blade, **e.g.,** its root section, is fixedly or rotatably connected to the hub. Apart from the (cylindrical) root section, the wind turbine blade is formed aerodynamically. The wind turbine blade comprises, for example, a pressure side (upwind side) and a suction side (downwind side). The pressure side and the suction side are connected with each other at a leading edge and a trailing edge. The pressure and suctions sides and the leading and trailing edges define an airfoil of the wind turbine blade.

The wind turbine blade is, in particular, manufactured by arranging a dry fiber lay-up in the lower mold and in the upper mold, infusing resin into the dry fiber lay-up by a vacuum-assisted resin infusion process, and curing the resin.

The wind turbine blade may be manufactured in one piece. In this case, dry fiber lay-up for the entire blade is arranged in the lower mold and in the upper mold and infused with resin and cured.

Alternatively, the wind turbine blade may be manufactured by pre-manufacturing lengthwise blade sections (e.g., an inboard blade section and an outboard blade section) and connecting the lengthwise blade sections with each other to form the full blade. In this case, dry fiber lay-up for a first lengthwise blade section is arranged in the lower mold and in the upper mold and infused with resin and cured. Then, dry fiber lay-up for a further lengthwise blade section is arranged in the lower mold (or a further lower mold) and in the upper mold (or a further upper mold) and infused with resin and cured. After pre-manufacturing two or more lengthwise blade sections, the lengthwise blade sections are connected to each other by any suitable means to form the full blade.

The fibers are, for example, arranged in the lower and upper molds in a dry condition, i. e. as fibers without a resin. The fibers may also be (partially) pre-impregnated fibers (prepreg). The fibers include, for example, glass fibers, carbon fibers, aramid fibers and/or natural fibers.

The fiber lay-up may include a fiber core material, such as wood, balsa, PET foam and/or PVC foam. The core material may be sandwiched between layers of fibers such that a fiber-reinforced resin laminate with a core structure is obtained.

Further, reinforcement beams may be arranged in the mold and may be connected to the fiber lay-up by the resin infusion and curing process. The reinforcement beams may include a leading-edge beam, a trailing-edge beam, a suction-side beam and/or a pressure-side beam.

Further, one or more webs may be arranged in the mold and may be connected to the fiber lay-up by the resin infusion and curing process. The one or more webs include, for example, a shear web connecting the blade shells of the pressure side and the suction side in the interior cavity of the manufactured blade. The shear web provides shear strength to the blade.

There may also be arranged pre-casted elements along with the dry fibers. For example, the reinforcement beams and/or the webs may be pre-casted elements.

A mold for manufacturing the wind turbine blade, or a lengthwise section of the wind turbine blade, comprises the lower mold and the upper mold. A fiber lay-up for forming a lower shell of the blade (e.g., a suction side of the blade), or a lengthwise section of the lower shell, may be arranged in the lower mold, and a fiber lay-up for forming an upper shell of the blade (e.g., a pressure side of the blade), or a lengthwise section of the upper shell, may be arranged in the upper mold.

The upper mold is arranged on the lower mold, thus forming a cavity between them. The mold may also comprise a mold core in the mold cavity.

The dry fibers may be arranged in the upper mold before arranging the upper mold on the lower mold. In this case, arranging the upper mold on the lower mold means arranging the upper mold having the dry fiber lay-up on the lower mold.

Alternatively, the dry fiber lay-up (e.g., for forming the upper blade shell) may be arranged on top of a mold core arranged in the lower mold before arranging the upper mold on the lower mold. In this case, arranging the upper mold on the lower mold means arranging the upper mold without the dry fiber lay-up on the mold core with the dry fiber lay-up. At the end of arranging the upper mold on the lower mold, the dry fiber lay-up is arranged in the upper mold core.

The fiber lay-up in the lower and upper molds may be covered by a vacuum bag, and a vacuum may be generated in a space covered by the vacuum bag, e.g. in a space between the lower and upper molds and the vacuum bag. The resin is then provided through the at least one upper resin inlet and infused into said space due to the generated vacuum, thus wetting the fibers.

The resin includes, for example, thermosets, thermoplastics, epoxy, polyurethane, vinyl ester and/or polyester.

The resin is, for example, cured by applying heat. The result is a fiber-reinforced resin laminate.

The at least one upper resin inlet is, in particular, at least one elongated fluid supply line with one or more openings through which the resin is infused into the fiber lay-up. The at least one upper resin inlet is, for example, at least one upper resin inlet channel. The at least one upper resin inlet channel comprises an opening along its length at its top portion, through which opening the resin is infused into the fiber lay-up. Such (a) channel(s) may be rigid or may be flexible. The at least one upper resin inlet channel is, in particular, arranged along a longitudinal direction of the upper mold. The longitudinal direction of the upper mold defines a longitudinal direction of the manufactured blade.

The at least one upper resin inlet channel includes, for example, two or more upper resin inlet channels. The two or more upper resin inlet channels may, for example, be arranged parallel to each other. The at least one upper resin inlet channel includes, for example, two, four or another even number of upper resin inlet channels. The two, four or another even number of upper resin inlet channels are arranged, for example, symmetrically with respect to a vertical plane intersecting a longitudinal axis of the mold/blade.

The at least one upper resin inlet being arranged at an upper portion of the upper mold means, in particular, that the at least one upper resin inlet is arranged in a volume defined by the upper portion of the upper mold.

The at least one upper resin inlet being arranged at an upper portion of the upper mold includes cases in which the at least one upper resin inlet is arranged directly at the upper mold as well as cases in which another element, such as the dry fiber lay-up, is arranged between the at least one upper resin inlet and the upper mold.

The at least one upper resin inlet is, for example, arranged between the upper mold and the dry fiber lay-up in the upper mold. Alternatively, the at least one upper resin inlet is arranged at an inner side of the dry fiber lay-up in the upper mold, wherein the inner side is facing away from the upper mold.

The upper portion of the upper mold includes, in particular, a top portion of the upper mold or a middle portion of the upper mold. Thus, the at least one upper resin inlet is, for example, arranged at a top portion of the upper mold. In another example, the at least one upper resin inlet is arranged half-way between the top portion of the upper mold and a bottom portion of the upper mold. The at least one upper resin inlet is, for example, arranged half-way between an upper end of the upper mold and a lower end of the upper mold.

At least one further resin inlet is arranged at the upper or lower mold and at a different height than the at least one upper resin inlet. Furthermore, the dry fiber lay-up in the upper and lower molds is infused, in addition to the resin being provided through the at least one upper resin inlet, with resin being provided through the at least one further resin inlet.

Having the at least one further resin inlet arranged at a different height than the at least one upper resin inlet allows to provide resin at two different heights. Therefore, an upward flow of resin and/or a downward flow of resin through the fiber lay-up can be supported by that resin inlet arranged at a larger/smaller height, respectively.

In particular, the at least one further resin inlet is arranged at a different height, with respect to a bottom portion or lower end of the lower mold, than the at least one upper resin inlet. In particular, the at least one further resin inlet is arranged at a different height, with respect to a floor level of a manufacturing site, than the at least one upper resin inlet.

The at least one upper resin inlet is arranged at a larger height than the at least one further resin inlet.

The at least one further resin inlet is, for example, arranged in a connection region between the upper and lower molds.

The at least one further resin inlet being arranged at the upper or lower mold includes cases in which the at least one further resin inlet is arranged directly at the upper/lower mold as well as cases in which another element, such as the dry fiber lay-up, is arranged between the at least one further resin inlet and the upper/lower mold.

The at least one further resin inlet is, in particular, at least one further elongated fluid supply line with openings through which the resin is infused into the fiber lay-up. The at least one further resin inlet is, for example, at least one further resin inlet channel with an opening along its length through which resin is provided. Such (a) further channel(s) may be rigid or may be flexible. The at least one further resin inlet channel is, in particular, arranged along the longitudinal direction of the upper mold/the manufactured blade.

According to a further embodiment, the method comprises the step of detecting a position of the resin during its flow through the dry fiber lay-up in the upper and lower molds.

Detecting the position of the resin, e.g., a flow front of the resin, during its flow through the dry fiber lay-up, allows to better control the infusion process. For example, the manner how resin is provided through a specific resin inlet, such as an amount of resin, an inlet pressure of resin and/or a timing can be better controlled.

The position of the resin is detected by one or more sensors. The one or more sensors are, for example, arranged in the internal structure of the upper and/or lower molds, e.g., within one or more boreholes of the upper and/or lower molds. Alternatively or in addition, the one or more sensors may also be arranged at an inner surface of the mold. The one or more sensors may be connected, wired or wireless, with a computing unit. The one or more sensors may, for example, be RFID sensors (radio-frequency identification sensor).

The one or more sensors may, for example, be gossip suction ports placed in the mold. Gossip suction ports comprise small suction ports with a transparent hose arranged in one or more through holes of the mold. Resin becoming visible within the transparent hose indicates the arrival of resin at the gossip suction port.

The one or more sensors may, for example, be pressure sensors, thermo sensors and/or dielectric sensors in or at the mold. The one or more sensors may, for example, include inspection glasses in the mold and/or a semitransparent mold.

The one or more sensors may, for example, also include line sensors detecting a position of the resin along a line. The line sensors may, for example, be optical line sensors and/or dielectric line sensors.

According to a further embodiment, the position of the resin is detected at the at least one upper resin inlet, at the at least one further resin inlet and/or at a lower or bottom portion of the lower mold.

Thus, an arrival and/or passing of the resin flowing through the dry fiber lay-up in the upper and lower molds can be detected at the at least one upper/further resin inlet and/or at a lower or bottom portion of the lower mold.

For example, detecting the position of the resin at the at least one upper resin inlet allows to notice the arrival and/or passing of the resin at the least one upper resin inlet and to control the providing of resin through this at least one upper resin inlet. Further, detecting the position of resin at the at least one further resin inlet allows to notice the arrival and/or passing of the resin at the least one further resin inlet and control the providing of resin through this at least one further inlet.

Detecting the position of the resin at the at least one upper resin inlet includes detecting the position of the resin, with respect to a flow direction of the resin, behind the at least one upper resin inlet.

Detecting the position of the resin at the at least one further resin inlet includes detecting the position of the resin, with respect to a flow direction of the resin, behind the at least one further resin inlet.

Additionally or alternatively, the position of the resin may also be detected at any other position of the upper and lower molds and/or the fiber lay-up.

The infusion of the dry fiber lay-up in the upper and lower molds is started by providing resin through the at least one upper resin inlet. Further, the infusion of the dry fiber lay-up in the upper and lower molds is continued, after providing resin through the at least one upper resin inlet, by providing resin through the at least one further resin inlet.

Starting the resin infusion through the at least one upper resin inlet allows to wet the dry fiber lay-up in the upper and lower molds predominantly by a downward resin flow (top-down-resin flow). This reduces or avoids the need for the resin to be raised in height. Furthermore, the flow of resin provided through the at least one upper resin inlet is supported by additional resin provided through the at least one further resin inlet. Thus, the dry fiber lay-up can be better infused with resin, even for very large blade sizes.

According to a further embodiment, if it was detected that the resin provided through the at least one upper resin inlet has flown to the at least one further resin inlet, resin is provided through the at least one further resin inlet.

Detecting that the resin has flown to the at least one further resin inlet includes that it was detected that the resin has passed the at least one further resin inlet.

By providing resin through the at least one further resin inlet only when the flow of resin has reached and/or passed this inlet, air pockets can be avoided. In particular, air pockets between converging flow fronts from the at least one upper resin inlet and the at least one further resin inlet can be avoided. Thus, it can be better prevented that dry areas remain in the manufactured blade.

According to a further embodiment, an inlet pressure of the resin being provided through the at least one upper resin inlet and/or the at least one further resin inlet is controlled to a pressure below atmospheric pressure.

Providing the resin with an inlet pressure below atmospheric pressure allows a better compaction of the fiber lay-up.

According to a further embodiment, an inlet pressure of the resin being provided through the at least one upper resin inlet and/or the at least one further resin inlet is controlled such that a pressure inside the space between the upper and lower molds is controlled to a pressure below atmospheric pressure.

For example, a pressure inside the space between the upper and lower molds and the vacuum bag is controlled to a pressure below atmospheric pressure.

In particular, a pressure inside the entire space between the upper and lower molds, for example the entire space between the upper and lower molds and the vacuum bag, is controlled to a pressure below atmospheric pressure.

Providing the resin with an inlet pressure such that the space comprising the dry fiber lay-up and into which the resin is drawn in is kept below atmospheric pressure allows a better compaction of the fiber lay-up, even in the lower and/or bottom portion of the lower mold.

According to a further embodiment, the inlet pressure of the resin being provided through the at least one upper resin inlet and/or the at least one further resin inlet is reduced during a flow of the resin through the dry fiber lay-up in the upper and lower molds.

Reducing the resin inlet pressure during a flow of the resin through the dry fiber lay-up in the upper and lower molds allows to compensate for an increase of a pressure inside the space between the upper and lower molds (the space between the upper and lower molds and the vacuum bag) during the resin's downward flow.

According to a further embodiment, the method comprises the step of extracting excess resin from a lower or bottom portion of the upper mold, from the lower mold and/or from a lower or bottom portion of the lower mold.

Extracting excess resin allows to prevent an overabundance of resin (resin lake) in a lower part of the mold.

According to a further embodiment, the at least one upper resin inlet is arranged exclusively at a lengthwise section of the upper mold configured for manufacturing an inboard blade section of the wind turbine blade.

In particular, the at least one upper resin inlet has an elongated channel-like structure and is arranged along the longitudinal direction of the mold exclusively at a lengthwise section of the upper mold configured for manufacturing an inboard blade section of the wind turbine blade.

Thus, (additional) upper resin inlets are applied only where the manufactured blade cross-section has a circular or close to circular cross-section, and, therefore, a large height. In other words, additional upper resin inlets are avoided for manufacturing an outboard blade section, where the blade cross-section has an airfoil shape, and, therefore, a smaller height.

The inboard blade section comprises, for example, a root section of the manufactured blade.

In particular, in a case in which the entire wind turbine blade is manufactured (in one piece or in lengthwise sections) by the use of one single upper mold and one single lower mold, a lengthwise section of the upper mold configured to manufacture an inboard blade section comprises the at least one upper resin inlet, whereas a lengthwise section of the upper mold configured to manufacture an outboard blade section does not comprise any upper resin inlets.

In an alternative case, in which there are two or more upper molds as well as two or more lower molds, a first one of the upper molds configured to manufacture an inboard blade section comprises the at least one upper resin inlet, whereas one or more further upper molds configured to manufacture one or more further outboards sections, respectively, do not comprise any upper resin inlets.

According to a further embodiment, the at least one upper resin inlet is arranged at a height above a lower end of the upper mold corresponding, as seen in cross-section, to an angle larger than 15 degrees, larger than 30 degrees, larger than 40 degrees, larger than 45 degrees, larger than 60 degrees, larger than 75 degrees and/or larger than 80 degrees. The angle being defined between a horizontal plane including the lower end of the upper mold and a plane intersecting a longitudinal axis of the manufactured blade and the at least one upper inlet.

The at least one upper resin inlet is, for example, arranged at a top portion of the upper mold **(e.g.,** angle being larger than 75 and/or 90 degrees). In another example, the at least one upper resin inlet is arranged half-way between the top portion of the upper mold and a bottom portion of the upper mold **(e.g.,** angle ranging between 30 and 60 degrees).

The embodiments and features described with reference to the method of the present invention apply mutatis mutandis to the mold of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a wind turbine according to an embodiment;
Fig. 2 shows a cross-section view of a mold for manufacturing a wind turbine blade of the wind turbine of Fig. 1, according to a first embodiment;
Fig. 3 shows a view similar as Fig. 2 but with resin partly infused into a fiber lay-up arranged in the mold;
Fig. 4 shows a view similar as Fig. 2 but with an apparatus for extracting excess resin;
Fig. 5 shows a perspective view of a variant of the mold of Fig. **2****;**
Fig. 6 shows a perspective view of a variant of the mold of Fig. **2****;**
Fig. 7 shows a flowchart illustrating a method for manufacturing the wind turbine blade of the wind turbine of Fig. 1 using the mold of Fig. 2, according to a first embodiment;
Fig. 8 shows a cross-section view of a mold for manufacturing a wind turbine blade of the wind turbine of Fig. 1 as a background information of the invention;
Fig. 9 shows a flowchart illustrating a method for manufacturing the wind turbine blade of the wind turbine of Fig. 1 using the mold of Fig. **8****;** and
Fig. 10 illustrates, in cross-section, a geometrical arrangement of resin inlets of the mold of Fig. 2 according to the first embodiment and of the mold of Fig. **8****.**

In the Figures, like reference numerals designate like or functionally equivalent elements, unless otherwise indicated.

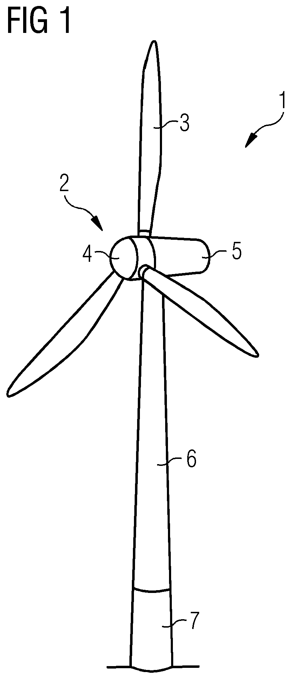

Fig. 1 shows a wind turbine 1 according to an embodiment. The wind turbine 1 comprises a rotor 2 having one or more blades 3 connected to a hub 4. The hub 4 is connected to a generator (not shown) arranged inside a nacelle 5. During operation of the wind turbine 1, the blades 3 are driven by wind to rotate and the wind's kinetic energy is converted into electrical energy by the generator in the nacelle 5. The nacelle 5 is arranged at the upper end of a tower 6 of the wind turbine 1. The tower 6 is erected on a foundation 7 such as a monopile or tripile. The foundation 7 is connected to and/or driven into the ground or seabed.

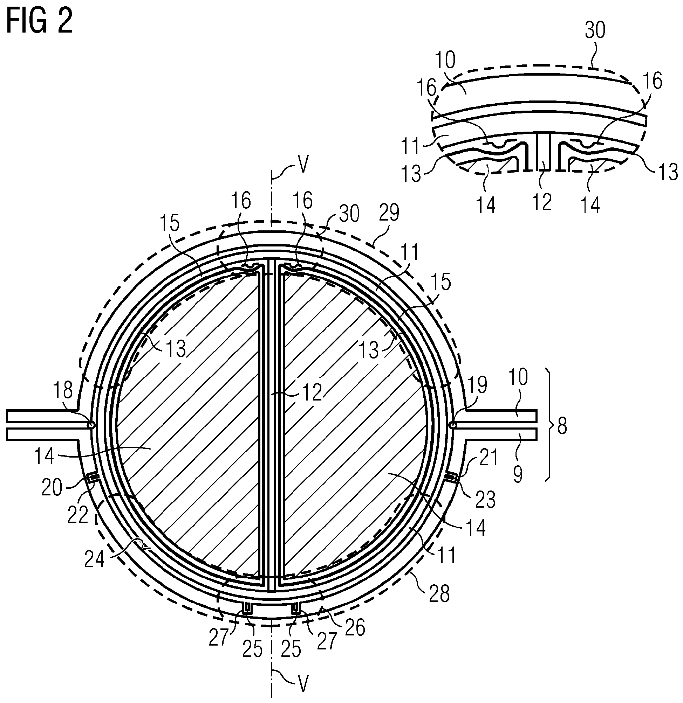

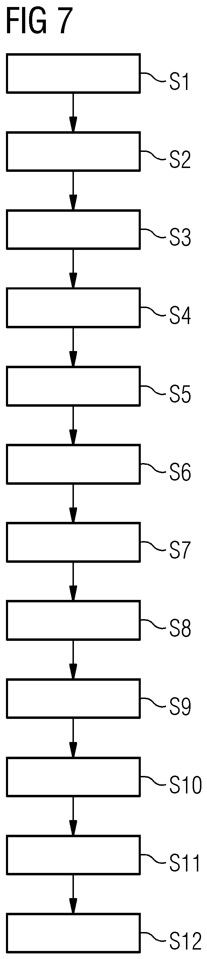

In the following an improved method for manufacturing a wind turbine blade 3 according to a first embodiment is described with respect to Figs. 2 to 7.

Fig. 2 shows a mold 8 in cross-section for manufacturing one of the wind turbine blades 3 of Fig. 1. The mold 8 comprises a lower mold 9 and an upper mold 10.

In step S1 of the method, a dry fiber lay-up 11 is arranged in the upper and lower molds 9, 10. The fiber lay-up 11 may also comprise a core material and/or reinforcement beams (not shown). Furthermore, a shear web 12 is arranged in the mold 8.

Furthermore, the fiber lay-up 11 is covered with one or more vacuum bags 13.

In step S2 of the method, the upper mold 10 is arranged on the lower mold 9. Fig. 2 shows the mold 8 in a closed state in which the upper mold 10 is already arranged on the lower mold 9.

It is noted that the mold 8 may further comprise one or more mold cores 14. In the example of Fig. 2 two mold cores 14 are shown. The mold cores 14 allow an improved arrangement of the dry fiber lay-up 11 in the mold 8, particularly in the upper mold 10, and of the shear web 12. Further, the upper mold 10 can be more easily arranged on the lower mold 9. In the case of having one or more mold cores 14, each of them is, for example, covered by one of the vacuum bags 14.

In step S3 of the method, a vacuum is generated in a space 15 covered by the vacuum bag 13. The space 15 is, in particular a space between the upper and lower molds 10, 9 and the one or more vacuum bags 13. The space 15 may include an area around the shear web 12.

The upper mold 10 comprises at least one upper resin inlet channel 16. In the example shown in Fig. 2, there are two upper resin inlet channels 16 arranged between the dry fiber lay-up 11 and the vacuum bag 13. The two upper resin inlet channels 16 are arranged on the mold cores 14 covered by the vacuum bags 13. Further, the two upper resin inlet channels 16 in Fig. 2 are arranged symmetrically with respect to a vertical center line V of the mold 8.

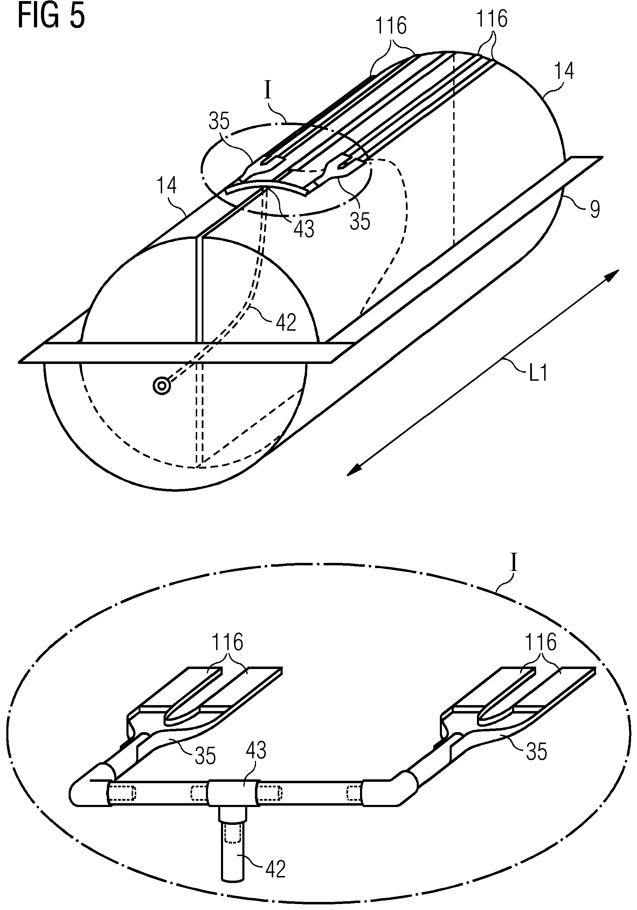

Each of the upper resin inlet channels 16 has an elongated structure arranged along a longitudinal direction L1 of the mold 8 (the longitudinal direction L1 is illustrated in Fig. 5). Further, each of the upper resin inlet channels 16 comprises an opening at its top along its length through which resin 17 can be provided and infused into the fiber lay-up 11.

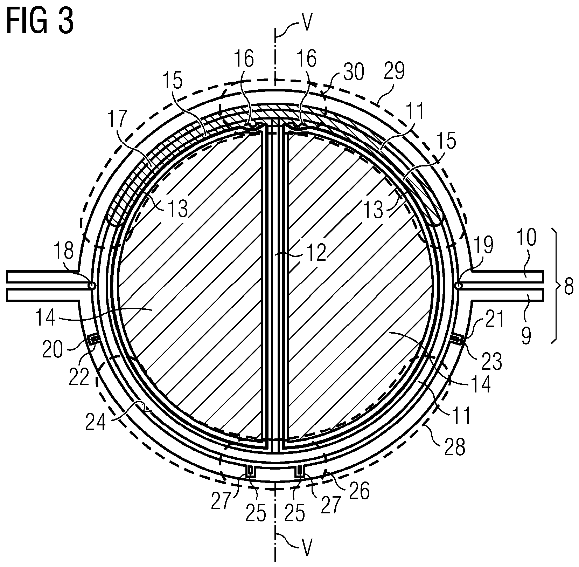

In step S4 of the method, a supply of resin 17 to the at least one upper resin inlet channel 16 is started, and resin 17 is provided through the opening of the at least one upper resin inlet channel 16 (Fig. 3).

The resin provided through the openings of the two upper resin inlet channels 16 is delivered with an inlet pressure below atmospheric pressure. The inlet pressure is, for example, slightly below atmospheric pressure. The inlet pressure has, for example, a value in the range of 0.6 to 0.95 bar, preferably in the range of 0.8 to 0.95 bar, even more preferably a value of about 0.9 bar.

In step S5 of the method, the resin 17 provided through the openings of the upper resin inlet channels 16 is infused into the fiber lay-up 11 due to the vacuum generated in the space 15. In particular, the resin 17 provided through the openings of the upper resin inlet channels 16 is infusing the fiber layup 11 in the upper mold 10.

The mold 8 comprises at least one further resin inlet channel 18, 19. In the example shown in Figs. 2 - 4, the mold 8 comprises two further resin inlet channels 18, 19 arranged at a connection region between the upper mold 10 and the lower mold 9. The further resin inlet channel 18 is, for example, a trailing-edge resin inlet channel. The further resin inlet channel 19 is, for example, a leading-edge resin inlet channel. Each of the further resin inlet channels 18, 19 has an elongated structure comprising an opening along its length.

The two further resin inlet channels 18, 19 in the example of Fig. 2 - 4 are arranged between the upper/lower mold 10, 9 and the dry fiber lay-up 11. In another example, the at least one further resin inlet channel 18, 19 may be arranged between the dry fiber lay-up 11 and the vacuum bag 13. In even another example, there may be arranged at least one further resin inlet channel 18, 19 between the upper/lower mold 10, 9 and the dry fiber lay-up 11 (e.g., as shown in Figs. 2 - 4), and there may be in addition arranged at least one further resin inlet channel between the dry fiber lay-up 11 and the vacuum bag 13.

In step S6 of the method, the position of the resin 17 (Fig. 3) is detected by means of one or more sensors 20, 21 at the at least one further resin inlet 18, 19.

The sensors 20, 21 in the example of Figs. 2 - 4 are arranged within the lower mold 9. The lower mold 9 comprises several boreholes 22, 23 having each an opening towards an inner surface 24 of the lower mold 9. Each of the sensors 20, 21 is arranged in one of the boreholes 22, 23 such that the respective sensor 20, 21 is flush with the inner surface 24 of the lower mold 9. The sensors 20, 21 could also be configured and arranged differently, for example as stickers at the inner surface 24 (i. e. without boreholes in the mold 8).

The sensors 20, 21 are, for example, pressure sensors. The sensors 20, 21 could also be other sensors capable of detecting the resin 17.

The sensor 20 is arranged below the further resin inlet channel 18 to detect if the resin 17 provided through the openings of the upper resin inlet channels 16 has passed the further resin inlet channel 18.

The sensor 21 is arranged below the further resin inlet channel 19 to detect if the resin 17 provided through the upper resin inlet channels 16 has passed the further resin inlet channel 19.

In step S7 of the method, resin 17 is provided through the openings of the further resin inlet channels 18 and 19, if it was detected by means of the sensors 20, 21 that a flow front of the resin 17 provided through the upper resin inlet channels 16 has reached and passed the further resin inlet channels 18 and 19.

In detail, a supply of resin 17 to the further resin inlet channels 18 and 19 is started in step S7 and the resin 17 is provided through the openings of the further resin inlet channels 18, 19 with an inlet pressure below atmospheric pressure. The resin provided through the further resin inlet channels 18, 19 is, for example, delivered with an inlet pressure slightly below atmospheric pressure. The inlet pressure has, for example, a value in the range of 0.6 to 0.95 bar, preferably in the range of 0.8 to 0.95 bar, even more preferably a value of about 0.9 bar.

Furthermore, a supply of resin 17 to the upper resin inlet channels 16 may be closed in step S7.

In step S8 of the method, the fiber layup 11 in the lower mold 9 is infused with resin 17 provided through the upper resin inlet channels 16 and the further resin inlet channels 18, 19.

In step S9 of the method, the inlet pressure of the resin 17 provided through the further resin inlet channels 18, 19 is reduced. The inlet pressure of the resin 17 may be reduced continuously or may be reduced stepwise. The inlet pressure of the resin 17 is reduced in order to keep the pressure in the entire space 15 (chamber 15) below atmospheric pressure. In particular, the inlet pressure of the resin 17 is reduced in order compensate for an increase of the pressure in the space 15 during the downward flow of the resin 17.

Step S9 may be carried out throughout the whole infusion process (e.g., in S5 to S10), whenever an adjustment of the pressure within the space 15 is necessary to keep the pressure in the space 15 below atmospheric pressure.

In step S10 of the method, a position of the resin 17 is detected by means of one or more sensors 25 at a bottom portion 26 of the lower mold 9.

In the example of Figs. 2 - 4, there are shown two sensors 25 arranged within boreholes 27 in the lower mold 9. The sensors 25 are, for example, pressure sensors, but could be also other sensors capable of detecting the position of the resin 17.

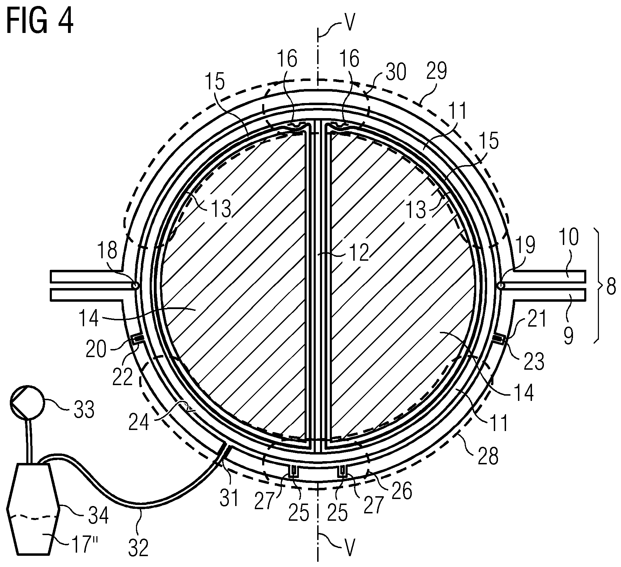

In step S11 of the method, an overabundance of resin 17 in a lower portion 28 and/or in the bottom portion 26 of the lower mold 9 is handled by extracting excess resin 17" from the lower portion 28 and/or from the bottom portion 26 (Fig. 4). The excess resin 17" is, for example, extracted by means of a through hole 31 within the lower mold 9, a hose 32, a pump 33, and an overflow container 34.

It is noted that in Fig. 4 the resin 17 infused already into the fiber lay-up 11 is not shown for clarity.

Step 11 of the method may be carried out throughout the whole infusion process (e.g., in S8 to S10), whenever an overabundance of resin 17 occurs in a lower part of the mold 8.

In step S12 of the method, a vacuum is applied to the top inlet channels 16 in order to keep the resin 17 in an upper portion 29 and/or a top portion 30 of the upper mold 10.

Step S12 may be carried out simultaneously with any of steps S7 to S11. In particular, step 12 may be carried out at the end of the infusion process and/or after finishing the infusion process (e.g., at the end of S8, after S8, S9, S10 and/or S11).

Fig. 5 shows a variant of the at least one upper resin inlet channel 16 of Figs. 2 - 4. Shown in Fig. 5 is a perspective view of the lower mold 9 and the two mold cores 14 of the mold 8. The upper mold 10 is not shown in Fig. 5 for illustration purposes. In the example of Fig. 5, the at least one upper resin inlet channel 116 comprises four upper resin inlet channels 116 arranged on the mold cores 14, parallel to each other and along a longitudinal direction L1 of the mold 8. The longitudinal direction L1 of the mold 8 defines a longitudinal direction of the blade manufactured by use of the mold 8. Resin is supplied through a hose 42 via a branch 43 and two manifolds 35 to the four upper resin inlet channels 116.

An insert I in Fig. 5 shows an extended view of the branch 43, the manifolds 35 and the upper resin inlet channels 116.

In the example of Fig. 5, there are shown one branch 43, two manifolds 35 and one hose 42. However, in another example, there may be two hoses, two branches and no manifold. In this case, each of the two hoses is connected fluidly with one of the two branches. Further, each of the two branches is fluidly connected with two of the four upper resin inlet channels.

In the example of Fig. 5, there are shown four upper resin inlet channels 116. However, in another example, there may be a different (even or uneven) number of upper resin inlet channels.

Furthermore, any suitable number of upper resin inlet channels 116, hoses 42, branches 43 and manifolds 35 can be used.

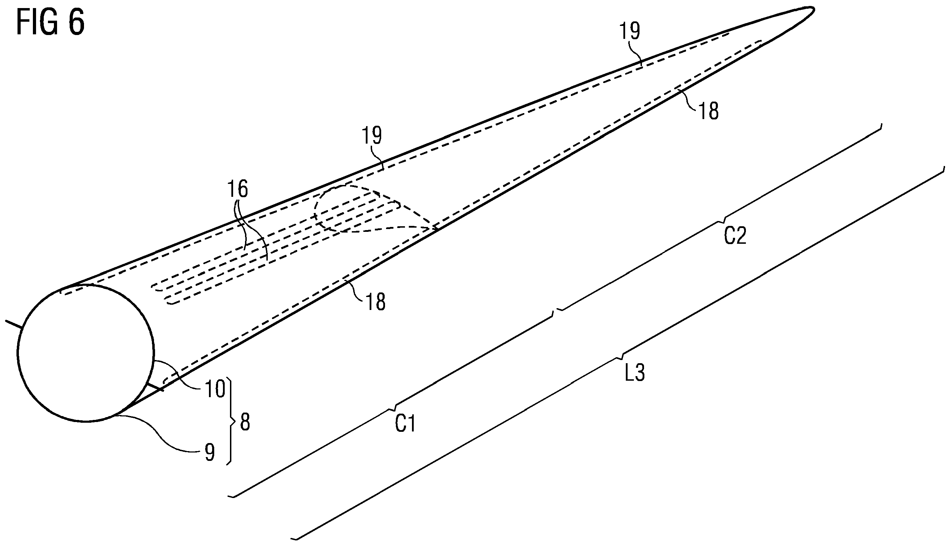

The method according to the first embodiment may be applied for manufacturing of the entire wind turbine blade 3 (Fig. 1). In this case the described upper resin inlet channels 16 (or 116) are arranged along the entire upper mold 10. Alternatively, as shown in Fig. 6, the upper mold 10 may comprise the described upper resin inlet channels 16 (or 116) only in a lengthwise section C1 of the upper mold 10 configured for manufacturing an inboard blade section of the wind turbine blade 3. The section C1 corresponds, for example, to one third of the entire length L3 of the mold 8. The fiber lay-up 11, 11' in the mold 8 in the section C1 is, for example, infused with resin as described in steps S1 to S12. The fiber lay-up 11, 11' in the mold 8 in the section C2 is, for example, infused with resin by providing resin only through the inlet channels 18 and 19.

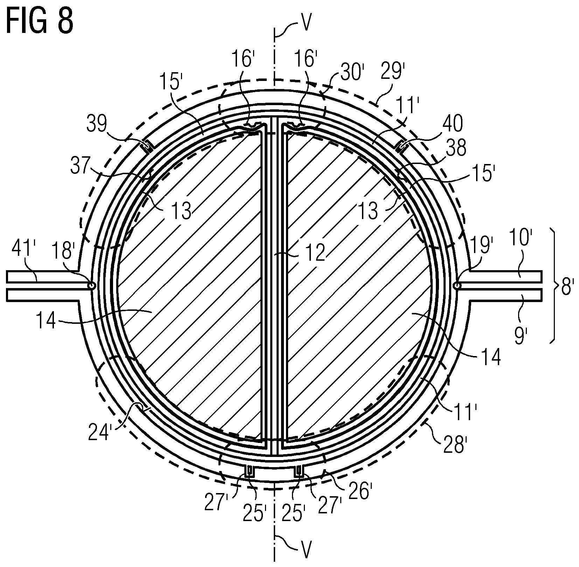

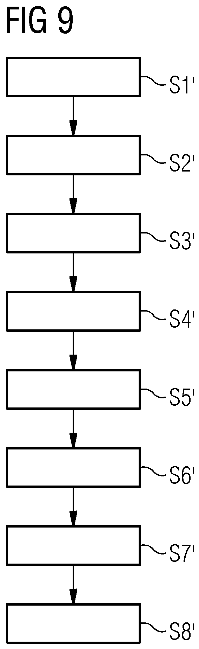

In the following an improved method for manufacturing a wind turbine blade 3 according to a second embodiment is described with respect to Figs. 8 and 9.

The mold 8' used in the method according to the second embodiment is similar to the mold 8 used in the method according to the first embodiment apart from a different arrangement of upper resin inlet channels 37, 38 and of sensors 39, 40.

As shown in Fig. 8, the upper mold 10' of the mold 8' according to the second embodiment comprises in addition to or instead of upper resin inlet channels 16' upper resin inlet channels 37 and 38. The upper resin inlet channels 37 and 38 are arranged half way between a top portion 30' of the upper mold 10'and a lower end 41' of the upper mold 10'. Furthermore, the upper resin inlet channels 37 and 38 are, for example, arranged between the dry fiber lay-up 11 and the vacuum bag 13.

Furthermore, the upper mold 10' according to the second embodiment comprises the sensors 39 and 40 above the upper resin inlet channels 37 and 38, respectively.

Steps S1', S2' and S3' of the method according to the second embodiment are similar as steps S1, S2, and S3 of the method according to the first embodiment. Therefore, a description thereof will be omitted.

In step S4' of the method according to the second embodiment, a supply of resin to the at least one further resin inlet channel, i. e. in the example of Fig. 8 to the two further resin inlet channels 18' and 19', is started. Furthermore, resin (not shown in Fig. 8) is provided through openings of the further resin inlet channels 18' and 19'. The resin is provided through the openings of the further resin inlet channels 18' and 19' with an inlet pressure below atmospheric pressure. The inlet pressure has, for example, a similar value or range as the inlet pressure of the resin 17 provided through the upper resin inlet channels 16 in the first embodiment.

In step S5' of the method according to the second embodiment, the resin provided through the further resin inlet channels 18' and 19' is infused into the fiber layup 11' due to the vacuum generated in the space 15'. In particular, the resin provided through the further resin inlet channels 18' and 19' is flowing upwards wetting the fiber layup 11' in the upper mold 10'. Furthermore, the resin provided through the further resin inlet channels 18' and 19' is also flowing downwards wetting the fiber layup 11' in the lower mold 9'.

In step S6' of the method according to the second embodiment, a position of the resin provided through the further resin inlet channels 18' and 19' and flowing upwards is detected by means of the sensors 39 and 40.

In particular, the sensor 39 is arranged above the upper resin inlet channel 37. By means of the sensor 39 it can be detected if the resin provided through the further resin inlet channel 18' and flowing upwards has passed the upper resin inlet channel 37. Furthermore, by means of the sensor 40 it can be detected if the resin provided through the further resin inlet channel 19' and flowing upwards has passed the upper resin inlet channel 38.

In step S7' of the method according to the second embodiment, resin is provided through the upper resin inlet channels 37 and 38, if it was detected by means of the sensors 39, 40 that a flow front of the resin provided through the further resin inlet channels 18', 19' has reached and passed the upper resin inlet channels 37 and 38, respectively.

In detail, a supply of resin to the upper resin inlet channels 37 and 38 is started in step S7' and resin (not shown) is provided through openings of the upper resin inlet channels 37 and 38. The resin provided through the upper resin inlet channels 37, 38 is delivered with an inlet pressure below atmospheric pressure. The inlet pressure has, for example, a similar value or range as the inlet pressure of the resin 17 provided through the upper resin inlet channels 16 in the first embodiment.

In step S8' of the method according to the second embodiment, the fiber layup 11' in the upper mold 10' is infused with resin provided through the further resin inlet channels 18' and 19' and through the upper resin inlet channels 37 and 38.

The resin provided through the upper resin inlet channels 37 and 38 supports an upward flow of resin through the fiber layup 11' in the upper mold 10'. Thus, the fiber layup 11' can be better wetted even in an upper portion 29' and/or a top portion 30' of the upper mold 10'. Therefore, spots of fiber layup 11' remaining dry, i. e. without resin, in the manufactured blade 3 can be better prevented, even for very large blades having a large cross section.

The upper mold 10' according to the second embodiment may comprise in addition to the upper resin inlet channels 37 and 38 also upper resin inlet channels 16', as shown in Fig. 8. Resin provided through the optional upper resin inlet channels 16' can further support the infusion of the fiber layup 11' in the upper portion 29' and in the top portion 30' of the upper mold 10'.

The mold 8' according to the second embodiment may also comprise further sensors in addition to the sensors 39, 40. For example, the mold 8' may comprise sensors 25' similar to the sensors 25 of the first embodiment.

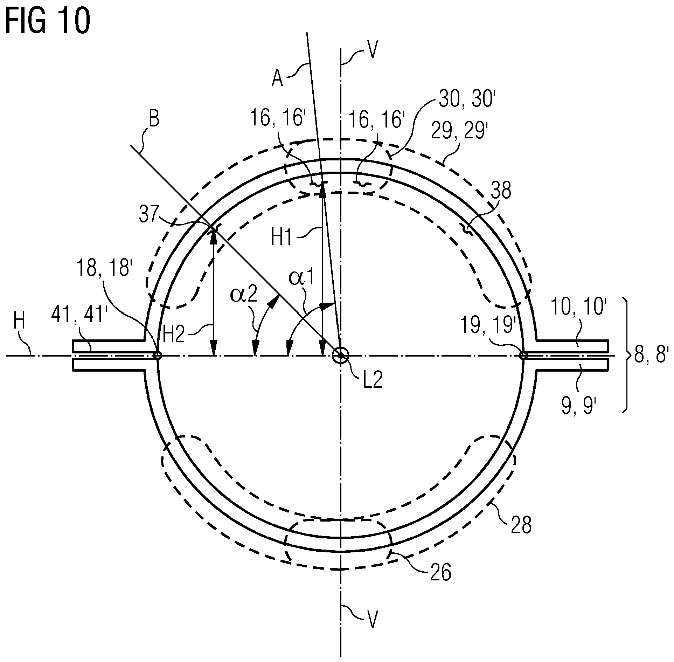

Fig. 10 illustrates, in cross-section, a geometrical arrangement of the at least one upper inlet 16 and the at least one further inlet 18, 19 according to the first embodiment. Furthermore, Fig. 10 illustrates, in cross-section, the geometrical arrangement of the at least one upper inlet 37, 38, the optional at least one upper inlet 16' and the at least one further inlet 18', 19' according to the second embodiment.

The at least one upper inlet 16 according to the first embodiment is arranged at the upper portion 29 of the upper mold 10. In the example shown in Figs. 2 - 4 and 10, the at least one upper inlet 16 comprises two upper resin inlet channels 16. The upper resin inlet channels 16 are both arranged at the top portion 30 of the upper mold 10. In particular, each of the upper resin inlet channels 16 is, as seen in the cross-section view of Figs. 2 - 4 and 10, arranged at a height H1 above a lower end 41 of the upper mold 10. The height H1 corresponds to an angle α1 larger than 80 degrees in the example of Fig. 2 - 4 and 10. The angle α1 is, in particular, defined between a horizontal plane H and a plane A. The horizontal plane H includes the lower end 41 of the upper mold 10 and/or a dividing line between the lower and upper molds 9, 10. The plane A is, as seen in cross-section, intersecting a longitudinal axis L2 of the manufactured blade and the at least one upper inlet 16.

The at least one upper inlet 37, 38 according to the second embodiment is arranged at the upper portion 29' of the upper mold 10'. In the example shown in Figs. 8 and 10, the at least one upper inlet 37, 38 comprises two upper resin inlet channels 37 and 38. Each of the upper resin inlet channels 37, 38 is, as seen in the cross-section view of Figs. 8 and 10, arranged at a height H2 above a lower end 41' of the upper mold 10'. The height H2 corresponds to an angle α2 of about 45 degrees in the example of Figs. 8 and 10. The angle α2 is, in particular, defined between a horizontal plane H including the lower end 41' of the upper mold 10' and a plane B. The plane B is, as seen in cross-section, intersecting a longitudinal axis L2 of the manufactured blade and the at least one upper inlet 37, 38.

The mold 8' according to the second embodiment may optionally also comprise the upper resin inlet channels 16', as shown in Figs. 8 and 10. In the example shown in Figs. 8 and 10, the at least one upper resin inlet 16' comprises two upper resin inlet channels 16' configured and arranged similar as the upper resin inlet channels 16 according to the first embodiment.

Although the present invention has been described in accordance with preferred embodiments, it is obvious for the person skilled in the art that, within the scope of the appended claims, modifications are possible in all embodiments.

## Claims

1. A method for manufacturing a wind turbine blade (3), comprising the steps of:
- arranging (S2) an upper mold (10) on a lower mold (9), wherein a dry fiber lay-up (11) is arranged in the upper mold (10) or in the upper mold (10) and the lower mold (9),
- applying (S3) vacuum to a space (15) between the upper and lower molds (10, 9), and
- infusing (S5, S8) the dry fiber lay-up (11) in the upper and/or lower molds (10, 9) with resin (17), wherein:
the infusion (S5, S8) of the dry fiber lay-up (11) is started by providing (S4) resin (17) through at least one upper resin inlet (16) arranged at an upper portion (29) of the upper mold (10), **characterized in that**
the infusion (S5, S8) of the dry fiber lay-up (11) is continued, after providing (S4) resin (17) through the at least one upper resin inlet (16), by providing (S7) resin (17) through at least one further resin inlet (18, 19) arranged at the upper or lower mold (10, 9) and at a smaller height than the at least one upper resin inlet (16).

2. The method according to claim 1, comprising the step of detecting (S6, S10) a position of the resin (17) during its flow through the dry fiber lay-up (11) in the upper and lower molds (10, 9).

3. The method according to claim 2, wherein the position of the resin (17) is detected (S6, S10) at the at least one upper resin inlet (16), at the at least one further resin inlet (18, 19) and/or at a lower or bottom portion (26, 28) of the lower mold (9).

4. The method according to one of claims 1 - 3, wherein, when it is detected (S6) that the resin (17) provided (S4) through the at least one upper resin inlet (16) has flown to the at least one further resin inlet (18, 19), resin (17) is provided (S7) through the at least one further resin inlet (18, 19).

5. The method according to one of claims 1 - 4, wherein an inlet pressure of the resin (17) being provided (S4, S7) through the at least one upper resin inlet (16) and/or the at least one further resin inlet (18, 19) is controlled to a pressure below atmospheric pressure.

6. The method according to one of claims 1 - 5, wherein an inlet pressure of the resin (17) being provided (S4, S7) through the at least one upper resin inlet (16) and/or the at least one further resin inlet (18, 19) is controlled such that a pressure inside the space (15) between the upper and lower molds (10, 9) is controlled to a pressure below atmospheric pressure.

7. The method according to claim 5 or 6, wherein the inlet pressure of the resin (17) being provided (S4, S7) through the at least one upper resin inlet (16) and/or the at least one further resin inlet (18, 19) is reduced (S9) during a flow of the resin (17) through the dry fiber lay-up (11) in the upper and lower molds (10, 9).

8. The method according to one of claims 1 - 7, comprising the step of extracting (S11) excess resin (17") from a lower or bottom portion of the upper mold (10), from the lower mold (9) and/or from a lower or bottom portion (28, 26) of the lower mold (9).

9. The method according to one of claims 1 - 8, wherein the at least one upper resin inlet (16) is arranged exclusively at a lengthwise section (C1) of the upper mold (10) configured for manufacturing an inboard blade section of the wind turbine blade (3).

10. The method according to one of claims 1 - 9, wherein:
the at least one upper resin inlet (16) is arranged at a height (H1, H2) above a lower end (41) of the upper mold (10) corresponding, as seen in cross-section, to an angle (α1, α2) larger than 15 degrees, larger than 30 degrees, larger than 40 degrees, larger than 45 degrees, larger than 60 degrees, larger than 75 degrees and/or larger than 80 degrees, and
the angle (α1, α2) is defined between a horizontal plane (H) including the lower end (41) of the upper mold (10) and a plane (A, B) intersecting a longitudinal axis (L2) of the manufactured blade and the at least one upper inlet (16).

## Patentansprüche

1. Verfahren zur Herstellung eines Windturbinenblatts (3), umfassend die Schritte:
- Anordnen (S2) eines oberen Formwerkzeugs (10) auf einem unteren Formwerkzeug (9), wobei ein Trockenfasergelege (11) in dem oberen Formwerkzeug (10) oder in dem oberen Formwerkzeug (10) und dem unteren Formwerkzeug (9) angeordnet ist,
- Anlegen (S3) von Vakuum an einen Raum (15) zwischen dem oberen und unteren Formwerkzeug (10, 9) und
- Infundieren (S5, S8) des Trockenfasergeleges (11) in dem oberen und/oder unteren Formwerkzeug (10, 9) mit Harz (17), wobei:
die Infusion (S5, S8) des Trockenfasergeleges (11) durch Bereitstellen (S4) von Harz (17) durch mindestens einen oberen Harzeinlass (16), der an einem oberen Abschnitt (29) des oberen Formwerkzeugs (10) angeordnet ist, gestartet wird, **dadurch gekennzeichnet, dass**
die Infusion (S5, S8) des Trockenfasergeleges (11) nach Bereitstellen (S4) von Harz (17) durch den mindestens einen oberen Harzeinlass (16) durch Bereitstellen (S7) von Harz (17) durch mindestens einen weiteren Harzeinlass (18, 19) fortgesetzt wird, der an dem oberen oder unteren Formwerkzeug (10, 9) und in einer kleineren Höhe als der mindestens eine obere Harzeinlass (16) angeordnet ist.

2. Verfahren nach Anspruch 1, umfassend den Schritt des Detektierens (S6, S10) einer Position des Harzes (17) während seines Flusses durch das Trockenfasergelege (11) in dem oberen und unteren Formwerkzeug (10, 9).

3. Verfahren nach Anspruch 2, wobei die Position des Harzes (17) an dem mindestens einen oberen Harzeinlass (16), an dem mindestens einen weiteren Harzeinlass (18, 19) und/oder an einem unteren oder Bodenabschnitt (26, 28) des unteren Formwerkzeug (9) detektiert (S6, S10) wird.

4. Verfahren nach einem der Ansprüche 1 - 3, wobei, wenn detektiert (S6) wird, dass das durch den mindestens einen oberen Harzeinlass (16) bereitgestellte (S4) Harz (17) zu dem mindestens einen weiteren Harzeinlass (18, 19) geflossen ist, Harz (17) durch den mindestens einen weiteren Harzeinlass (18, 19) bereitgestellt (S7) wird.

5. Verfahren nach einem der Ansprüche 1 - 4, wobei ein Einlassdruck des Harzes (17), der durch den mindestens einen oberen Harzeinlass (16) und/oder den mindestens einen weiteren Harzeinlass (18, 19) bereitgestellt (S4, S7) wird, auf einen Druck unter Atmosphärendruck geregelt wird.

6. Verfahren nach einem der Ansprüche 1 - 5, wobei ein Einlassdruck des Harzes (17), der durch den mindestens einen oberen Harzeinlass (16) und/oder den mindestens einen weiteren Harzeinlass (18, 19) bereitgestellt (S4, S7) wird, so geregelt wird, dass ein Druck innerhalb des Raums (15) zwischen dem oberen und dem unteren Formwerkzeug (10, 9) auf einen Druck unter Atmosphärendruck geregelt wird.

7. Verfahren nach Anspruch 5 oder 6, wobei der Einlassdruck des Harzes (17), der durch den mindestens einen oberen Harzeinlass (16) und/oder den mindestens einen weiteren Harzeinlass (18, 19) bereitgestellt (S4, S7) wird, während eines Flusses des Harzes (17) durch das Trockenfasergelege (11) in dem oberen und unteren Formwerkzeug (10, 9) reduziert (S9) wird.

8. Verfahren nach einem der Ansprüche 1 - 7, umfassend den Schritt des Extrahierens (S11) von überschüssigem Harz (17") aus einem unteren oder Bodenabschnitt des oberen Formwerkzeugs (10), aus dem unteren Formwerkzeug (9) und/oder aus einem unteren oder Bodenabschnitt (28, 26) des unteren Formwerkzeugs (9).

9. Verfahren nach einem der Ansprüche 1 - 8, wobei der mindestens eine obere Harzeinlass (16) ausschließlich an einem Längsabschnitt (C1) des oberen Formwerkzeugs (10) angeordnet ist, der zum Herstellen eines Innenblattabschnitts des Windturbinenblatts (3) ausgestaltet ist.

10. Verfahren nach einem der Ansprüche 1 - 9, wobei:
der mindestens eine obere Harzeinlass (16) in einer Höhe (H1, H2) über einem unteren Ende (41) des oberen Formwerkzeugs (10) angeordnet ist, entsprechend, im Querschnitt gesehen, einem Winkel (α1, α2) größer als 15 Grad, größer als 30 Grad, größer als 40 Grad, größer als 45 Grad, größer als 60 Grad, größer als 75 Grad und/oder größer als 80 Grad, und
der Winkel (α1, α2) zwischen einer horizontalen Ebene (H) einschließlich des unteren Endes (41) des oberen Formwerkzeugs (10) und einer Ebene (A, B), die eine Längsachse (L2) des hergestellten Blattes und den mindestens einen oberen Einlass (16) schneidet, definiert ist.

## Revendications

1. Procédé de fabrication d'une pale d'éolienne (3), comprenant les étapes :
- disposer (S2) un moule supérieur (10) sur un moule inférieur (9), dans lequel une confection de fibres sèches (11) est agencée dans le moule supérieur (10) ou dans le moule supérieur (10) et le moule inférieur (9),
- appliquer (S3) du vide à un espace (15) entre les moules supérieur et inférieur (10, 9), et
- infuser (S5, S8) la confection de fibres sèches (11) dans le moule supérieur et/ou le moule inférieur (10, 9) avec de la résine (17), dans lequel :
l'infusion (S5, S8) de la confection de fibres sèches (11) démarre en fournissant (S4) de la résine (17) à travers au moins un orifice d'entrée supérieur de résine (16) agencé au niveau d'une portion supérieure (29) du moule supérieur (10),
**caractérisé en ce que** l'infusion (S5, S8) de la confection de fibres sèches (11) se poursuit, après avoir fourni (S4) de la résine (17) à travers l'au moins un orifice d'entrée supérieur de résine (16), en fournissant (S7) de la résine (17) à travers au moins un orifice d'entrée supplémentaire de résine (18, 19) agencé au niveau du moule supérieur ou inférieur (10, 9) et au niveau d'une hauteur inférieure à celle du au moins un orifice d'entrée supérieur de résine (16).

2. Procédé selon la revendication 1, comprenant les étapes consistant à détecter (S6, S10) une position de la résine (17) durant son écoulement à travers la confection de fibres sèches (11) dans les moules supérieur et inférieur (10, 9).

3. Procédé selon la revendication 2, dans lequel la position de la résine (17) est détectée (S6, S10) au niveau du au moins un orifice d'entrée supérieur de la résine (16), au niveau du au moins un orifice d'entrée supplémentaire de résine (18, 19) et/ou au niveau d'une portion inférieure ou de fond (26, 28) du moule inférieur (9).

4. Procédé selon l'une des revendications 1 à 3, dans lequel, lorsqu'il est détecté (S6) que la résine (17) fournie (S4) à travers l'au moins un orifice d'entrée supérieur de résine (16) s'est écoulée jusqu'à le au moins un orifice d'entrée supplémentaire de résine (18, 19), de la résine (17) est fournie (S7) à travers l'au moins un orifice d'entrée supplémentaire de résine (18, 19).

5. Procédé selon l'une des revendications 1 à 4, dans lequel une pression d'entrée de la résine (17) étant fournie (S4, S7) à travers l'au moins un orifice d'entrée supérieur de résine (16) et/ou l'au moins un orifice d'entrée supplémentaire de résine (18, 19) est contrôlée jusqu'à une pression inférieure à la pression atmosphérique.

6. Procédé selon l'une des revendications 1 à 5, dans lequel une pression d'entrée de la résine (17) étant fournie (S4, S7) à travers l'au moins un orifice d'entrée supérieur de résine (16) et/ou l'au moins un orifice d'entrée supplémentaire de résine (18, 19) est contrôlée de sorte qu'une pression à l'intérieur de l'espace (15) entre les moules supérieur et inférieur (10, 9) est contrôlée jusqu'à une pression inférieure à la pression atmosphérique.

7. Procédé selon la revendication 5 ou 6, dans lequel la pression d'entrée de la résine (17) étant fournie (S4, S7) à travers l'au moins un orifice d'entrée supérieur de résine (16) et/ou l'au moins un orifice d'entrée supplémentaire de résine (18, 19) est réduite (S9) durant un écoulement de la résine (17) à travers la confection de fibres sèches (11) dans les moules supérieur et inférieur (10, 9).

8. Procédé selon l'une des revendications 1 à 7, comprenant l'étape d'extraction (S11) de résine en excès (17") d'une portion inférieure ou de fond du moule supérieur (10), depuis le moule inférieur (9) et/ou depuis une portion inférieure ou de fond (28, 26) du moule inférieur (9).

9. Procédé selon l'une des revendications 1 à 8, dans lequel l'au moins un orifice d'entrée supérieur de résine (16) est agencé exclusivement au niveau d'une section dans le sens de la longueur (C1) du moule supérieur (10) configuré pour fabriquer une section de pale intérieure de la pale d'éolienne (3).

10. Procédé selon l'une des revendications 1 à 9, dans lequel :
l'au moins un orifice d'entrée supérieur de résine (16) est agencé au niveau d'une hauteur (H1, H2) au-dessus d'une extrémité inférieure (41) du moule supérieur (10) correspondant, tel qu'observé en section transversale, sous un angle (α1, α2) plus grand que 15 degrés, plus grand que 30 degrés, plus grand que 40 degrés, plus grand que 45 degrés, plus grand que 60 degrés, plus grand que 75 degrés et/ou plus grand que 80 degrés, et
l'angle (α1, α2) est défini entre un plan horizontal (H) incluant l'extrémité inférieure (41) du moule supérieur (10) et un plan (A, B) en intersection avec un axe longitudinal (L2) de la pale manufacturée et du au moins un orifice d'entrée supérieur (16).
